# EUROPÄISCHE PATENTANMELDUNG

(11) **EP 2 017 574 A2**
(43) Veröffentlichungstag der Anmeldung: **21.01.2009**
(21) Anmeldenummer: 08012279.9
(22) Anmeldetag: 08.07.2008
(51) Int. Cl.: G01C 15/00

(54) **Verfahren zur geodätischen Überwachung von Schienen**

(30) Priorität: 17.07.2007 DE 102007033185
(71) Anmelder: ThyssenKrupp GfT Gleistechnik GmbH, 45143 Essen (DE); Hanack und Partner, 22453 Hamburg (DE)
(72) Erfinder: Dennig, Dirk, 45130 Essen (DE); Schmidt-Böllert, Andreas, 25462 Rellingen (DE)
(74) Vertreter: Döpp, Ludger

(57) **Zusammenfassung**

Verfahren zur geodätischen Überwachung von für Fördergeräte vorgesehene Schienen, indem zumindest im Bereich eines Schienenendes ein Tachymeter mit Raumbezug stationiert wird, auf der jeweils zu überprüfenden Schiene ein Schienenmessfahrzeug aufgesetzt wird, das zur Messung eines unbelasteten Zustands der Schiene die jeweilige Schiene allein befährt und zur Messung eines belasteten Zustands der Schiene mit der gleichen Geschwindigkeit, wie das Fördergerät angetrieben wird, wobei die Aufnahme der Messpunkte während der Messung im be- und/oder unbelasteten Zustand der jeweiligen Schiene kontinuierlich erfolgt.

## Beschreibung

Die Erfindung betrifft ein Verfahren zur geodätischen Überwachung von Schienen, auf denen sich verfahrbare Fördergeräte bewegen.

Die DE 197 47 872 C2 offenbart ein System für die Vermessung von Schienen, insbesondere Laufschienen für Krane, Regalbediengeräte, Laufradblöcke oder dergleichen, mit einer auf der Schiene angeordneten Sendereinheit, die einen Laser mit zumindest einem in Schienenlängsrichtung verlaufenden Laserstrahl umfasst und mit einer antreibbaren Empfängereinheit, die auf der selben Schiene in Schienenlängsrichtung verfahrbar ist und mindestens einen dem Laserstrahl zugewandten Fotoempfänger, aufweist, der ein vom auftreffenden Laserstrahl bewirktes Ausgangssignal erzeugt, anhand dessen die Ortslage des Laserstrahls in einer vertikalen quer zur Längsrichtung der Schiene ausgerichteten Messfläche ermittelbar ist, wobei ein Abstandssensor zur Erfassung der Abstandsänderung zwischen der Sendereinheit und der Empfängereinheit vorgesehen ist. Der Fotoempfänger weist eine rechteckige Matrix mit einer Vielzahl unmittelbar nebeneinander angeordneter Pixel auf, deren elektrische Ausgangssignale einer Auswerteelektronik zugeführt werden, durch welche die Bestimmung des Auftreffpunktes des räumlich lagestabilisierten Laserstrahls in der Messfläche allein auf elektronischem Wege durch Auswertung der Pixel-Ausgangssignale erfolgt. Der Fotoempfänger ist eine optoelektronische Kamera, vor der eine lichtdurchlässige Streuscheibe als Messfläche angeordnet ist, die optisch auf die Matrix der Kamera abgebildet ist.

Ziel des Erfindungsgegenstandes ist es, ein alternatives Messverfahren bereit zu stellen, das einfacher im Aufbau ist, auch schnellere Vergleichsmessungen erlaubt und die Messergebnisse im Raumbezug liefert.

Des Weiteren soll ein Schienenmessfahrzeug bereitgestellt werden, das zur Überprüfung einzelner Schienen vorgesehen ist und beliebige Parameter der jeweiligen Schienen vermessen kann.

Dieses Ziel wird erreicht durch ein Verfahren zur geodätischen Überwachung von für Fördergeräte vorgesehene Schienen, indem zumindest im Bereich eines Schienenendes ein Tachymeter mit Raumbezug stationiert wird, auf der jeweils zu überprüfenden Schiene ein Schienenmessfahrzeug aufgesetzt wird, das zur Messung eines unbelasteten Zustands der Schiene die jeweilige Schiene allein befährt und zur Messung eines belasteten Zustands der Schiene mit der gleichen Geschwindigkeit, wie das Fördergerät angetrieben wird, wobei die Aufnahme der Messpunkte während der Messung im be- und/oder unbelasteten Zustand der jeweiligen Schiene kontinuierlich erfolgt.

Vorteilhafte Weiterbildungen des erfindungsgemäßen Verfahrens sind den zugehörigen verfahrensgemäßen Unteransprüchen zu entnehmen.

Dieses Ziel wird auch erreicht durch einen Schienenmessfahrzeug, beinhaltend mindestens ein auf der jeweiligen zu vermessenden Schiene aufsetzbares Laufrad, das in Wirkverbindung mit einer Messhilfsmittel/Messmittel aufnehmenden Plattform steht.

Vorteilhafte Weiterbildungen des erfindungsgemäßen Schienenmessfahrzeuges sind den zugehörigen gegenständlichen Unteransprüchen zu entnehmen.

Im Folgenden wird als Beispiel für ein Messsystem für Schienen ein Stahlbetonbalken als Aufnahmeelement für eine einzelne Schiene herangezogen. Ebenso gut könnte es sich auch um Schwellen, o.ä. handeln.

Insbesondere im Bereich von Hafenanlagen ist der die Stahlbetonbalken aufnehmende Untergrund eher schlecht, so dass aufgrund der großen Belastung durch die auf den mit großer Spurbreite vorgesehenen Schienen verfahrbaren Fördergeräten (Krane oder dergleichen) sich hohe ermüdungswirksame Beanspruchungen für den jeweiligen Stahlbetonbalken ergeben. Mit Hilfe des erfindungsgemäßen geodätischen Überwachungsverfahrens werden das Verhalten der auf den Stahlbetonbalken aufgebrachten Schienen überwacht und Rückschlüsse auf mögliche Setzungs- und Verformungserscheinungen gezogen.

Zur Überprüfung der in vorangegangenen statischen Berechnungen getroffenen Annahmen ist es notwendig, die Auswirkungen von Beanspruchungen aus äußerer Last und Zwang (Temperatur) zu verifizieren. Werden signifikante Setzungen des Stahlbetonbalkens oder Verformungen der jeweiligen Schiene durch das Monitoring festgestellt, können diese durch Einsatz von Ausgleichsplatten bzw. lokalem Anheben des Stahlbetonbalkens ausgeglichen werden. Beim Einsatz von quer zu den Schienen verlegten Schwellen als Schienenaufnahmesystem erfolgt dies durch Stopfen oder ähnlich geeignete Maßnahmen.

Zur Überprüfung der Spurweiten und Höhen werden die Schienen einzeln vermessen. Jede Schiene kann bis zu 400 m lang sein. Bedarfsweise können auch längere Schienen auf entsprechende Balken/Schwellen eingesetzt werden. Um lokale Mulden zu erkennen und zu dokumentieren, ist auch eine Vermessung der jeweiligen Schiene im belasteten Zustand vorgesehen.

Die Vermessung erfolgt mit einem geodätischen Tachymeter höchster Genauigkeit. Die Signalisierung der auszumessenden Punkte erfolgt mittels eines kleinen selbst fahrenden und bedarfsweise ferngesteuerten Schienenmessfahrzeugs sowohl im be- als auch im unbelasteten Zustand der Schienen.

Sollten bei den Messungen im belasteten Zustand signifikante Setzungen registriert werden, sind gegebenenfalls weitere Vermessungen bei stillstehendem Fördergerät über den Setzungsmulden hilfreich.

Jede Schiene wird vorzugsweise in einem vermessungstechnischen Arbeitsgang von der beiden Seiten erfasst. Die Vermessung der einzelnen Schienen erfolgt von den Stirnseiten der Kranbahn. Die Messung ist an eine Datenverarbeitungsanlage lage- und höhenmäßig angebunden und damit unabhängig von lokalen Setzungen.

Spurweiten können damit direkt abgeleitet und die Messungen über einen längeren Zeitraum miteinander verglichen werden.

Die Aufnahme der Messpunkte erfolgt während der Messung im be- und im unbelasteten Zustand, im so genannten Trackingmodus, das heißt, dass das Ziel kontinuierlich verfolgt und die Position registriert wird.

Die Erfassungsgeschwindigkeit des Schienenmessfahrzeuges bestimmt den Punktabstand. Bei einer Zeitspanne zwischen der Erfassung zweier Messpunkte von 0,3 bis 0,5 Sekunden, ergibt sich ein Punktabstand von 0,3 bis 0,5 m in Schienenlängsrichtung bei einer Fahrgeschwindigkeit von 1 m/s.

Für die Messung des unbelasteten Zustandes fährt das Schienenmessfahrzeug beispielsweise ferngesteuert über die jeweilige Schiene, während das Fördergerät in einer Warteposition parkt.

Das eingesetzte Schienenmessfahrzeug fährt bei der Messung im belasteten Zustand in kurzer Entfernung zum Fahrwerk des Fördergerätes (beispielsweise an den Kran oder dessen Fahrwerk gekoppelt) und damit mit gleicher Geschwindigkeit des Fördergerätes und ermöglicht so die Aufnahme der jeweiligen Schiene. Zur Genauigkeitssteigerung und zur Ausschaltung von Zielachs- und Kippachsfehlern ist für eine Zustandsmessung eine Vor- und Rückfahrt des Schienenfahrzeuges bei einer Beobachtung in I. und II. Fernrohrlage des Tachymeters sinnvoll.

Für die Vermessung kommt ein Präzisionstachymeter mit einer inneren Winkelmessgenauigkeit von mindestens 0,15 mgon und automatischer Zielverfolgung zum Einsatz.

Der Transport des Reflektors (Messhilfsmittel) erfolgt durch das Schienenmessfahrzeug, das folgende Eigenschaften aufweist:
- selbstfahrend, d. h. ferngesteuert
- leicht
- kompakt
- wettergeschützt (Feuchtigkeit, Kälte, Wärme, Staub)
- stabil
- lange Batteriedauer
- Möglichkeit zur Kopplung des Schienenmessfahrzeuges an das Fördergerät
- durch eine Markierung an dem Schienenmessfahrzeug wird sichergestellt, dass das Schienenmessfahrzeug immer an der gleichen Schienenflanke anliegt.

Hohe Anforderungen werden an die Genauigkeit in Quer-/Längsrichtung und Höhe der jeweiligen Schiene gestellt. Zur Erreichung einer ausreichenden Genauigkeit kann das Schienenmessfahrzeug mit einer Geschwindigkeit von bis zu 1 m/s verfahren werden.

Mit dem Erfindungsgegenstand sind folgende Vorteile verbunden:
- Minimierung der gesamten Messzeit
- Messung der jeweiligen Schiene in zwei Belastungszuständen
- Ausschaltung von Gerätefehlern (Zielachs- und Kippachsfehler)
- Einsatz von Standardvermessungsgeräten (Tachymeter höchster Genauigkeit).

Der Erfindungsgegenstand ist anhand eines Ausführungsbeispiels dargestellt und wird wie folgt beschrieben. Es zeigen:
- Figur 1: Prinzipskizze zur Veranschaulichung des erfindungsgemäßen Verfahrens in der Draufsicht;
- Figur 2: Prinzipskizze des Schienenmessfahrzeugs in Wirkverbindung mit einem Tachymeter und einer Datenverarbeitungsanlage;
- Figur 3: Draufsicht auf das Schienenmessfahrzeug mit angedeuteten Messhilfsmitteln/Messmitteln.

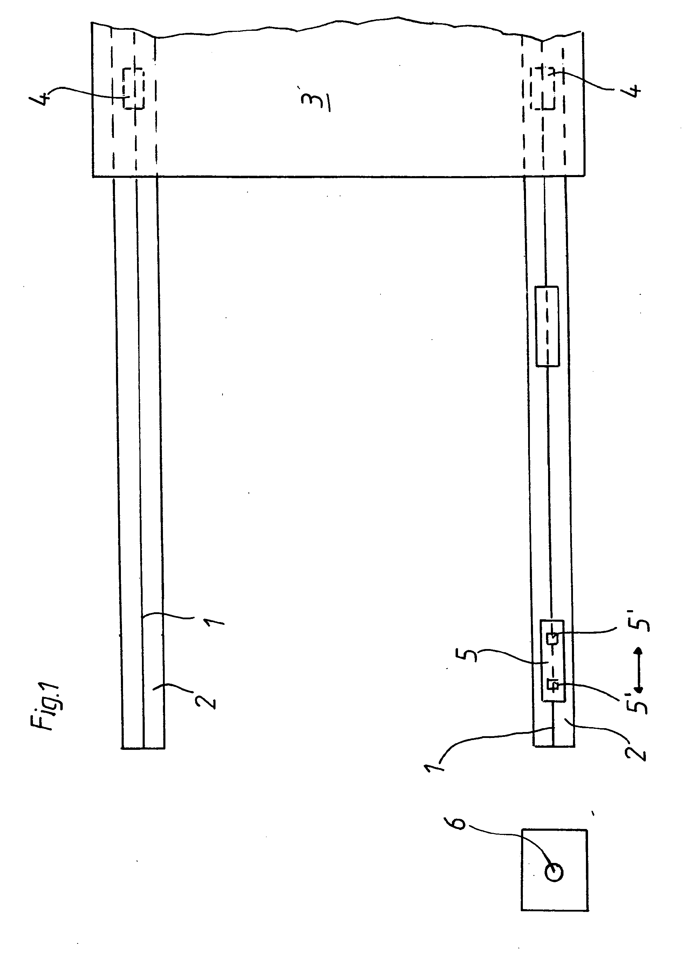

Figur 1 zeigt als Prinzipskizze eine Darstellung, mit welcher das erfindungsgemäße Verfahren veranschaulicht werden soll. Dargestellt sind Schienen 1, die in diesem Beispiel auf in Längsrichtung verlaufenden beabstandeten Stahlbetonbalken 2 verlegt sind. Die Stahlbetonbalken 2, respektive die Schienen 1, sind mit großer Spurbreite parallel zueinander verlaufend verlegt und dienen zur Aufnahme eines nur angedeuteten Fördergerätes 3. Das Fördergerät 3 kann beispielsweise eine Hafenumschlaganlage, wie ein Kran oder dergleichen sein, und weist ein entsprechend hohes Dienstgewicht auf, so dass im unbelasteten Zustand bereits hohe Kräfte in die Schienen 1 eingeleitet werden. Diese Kräfte erhöhen sich noch im Verlauf des Be- oder Entladens von Transportbehältnissen, wie Schiffen, Eisenbahnwagons oder dergleichen. Das Fördergerät 3 verfügt über Laufräder 4, die auf der jeweiligen Schiene 1 aufsitzen. Insbesondere im Bereich von Hafenanlagen verlegte Stahlbetonbalken 2 neigen dazu, unter hohen Gewichtsbelastungen sich zu senken. In gleicher Weise ist durch das hohe Dienst-und Arbeitsgewicht des Fördergerätes ein Verschleiß der jeweiligen Schiene 1 gegeben. Ausfälle von Fördergeräten durch abgesenkte Stahlbetonbalken 2, respektive (teil-)verschlissene Schienen 1 sind sehr kostenintensiv, so dass der Zustand der Schienen 1/ Stahlbetonbalken 2 in bestimmten Zeitintervallen notwendig ist. Darüber hinaus muss eine entsprechende Dokumentation herbeigeführt werden, die einen Vergleich der intervallmäßig gewonnenen Messergebnisse erlaubt. Zu diesem Zweck kommt ein Schienenmessfahrzeug 5 zum Einsatz, das jeweils auf einer Schiene 1 aufgesetzt wird. Zur Überprüfung der jeweiligen Schiene 1 in einem unbelasteten Zustand wird das Fördergerät 3, beispielsweise an einem Ende der Schienen 1, geparkt und das Schienenmessfahrzeug 5 mit definierter Geschwindigkeit in Schienenlängsrichtung bewegt. An dem anderen Schienenende ist ein Tachymeter 6 höchster Messgenauigkeit positioniert. Das Schienenmessfahrzeug 5 verfügt über Laufrollen 5', die auf der jeweiligen Schiene 1 abrollen. Nicht dargestellt ist ein elektrischer Antrieb, über den das Schienenmessfahrzeug in Längsrichtung der jeweiligen Schiene, beispielsweise ferngesteuert, antreibbar ist.

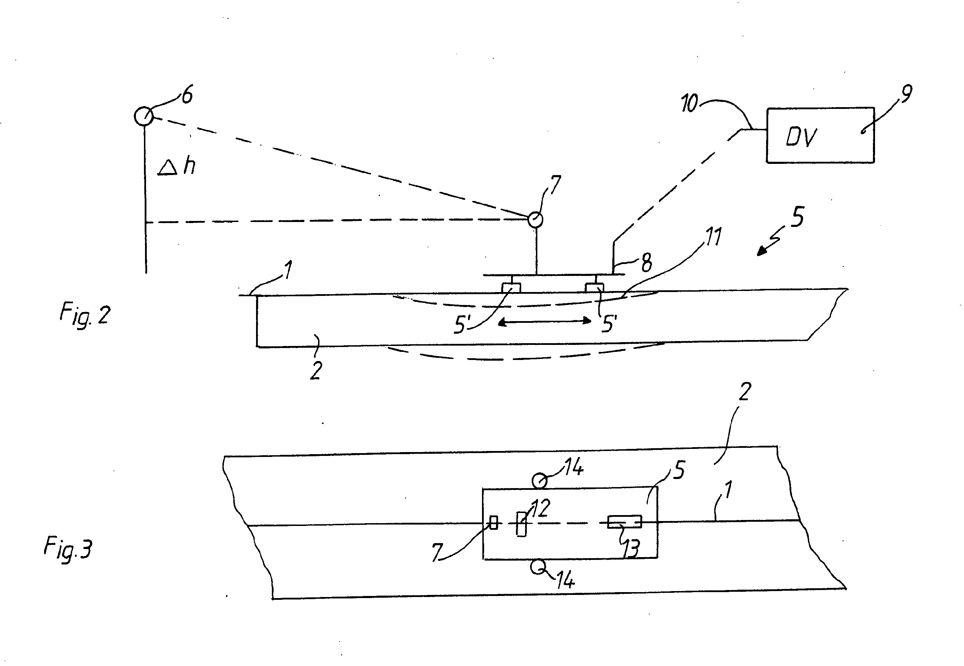

Figur 2 zeigt als Prinzipskizze das Messsystem zur Veranschaulichung des erfindungsgemäßen Verfahrens in der Seitenansicht. Das Schienenmessfahrzeug 5 verfügt über einen Reflektor 7 (Messhilfsmittel), der zum Tachymeter 6 hin ausgerichtet ist. Über eine Antenne 8 ist das Schienenmessfahrzeug mit einer Datenverarbeitungsanlage 9 verbunden, die ebenfalls eine Antenne 10 aufweist. Ebenfalls erkennbar ist der Stahlbetonbalken 2, auf welchem die Schiene 1 gelagert ist. Gestrichelt angedeutet ist ein abgesenkter Abschnitt 11 des Stahlbetonbalkens 2. Im Verlauf des Überfahrens dieses abgesenkten Bereiches 11 findet zwischen dem Tachymeter 6 und dem Reflektor 7 ein entsprechender Messvorgang statt, durch welchen eine Höhendifferenz Δh ermittelt werden kann. Dieser festgestellte Messwert wird an die Datenverarbeitungsanlage 9 übermittelt und der abgesetzte Bereich 11 dokumentiert. In einem Folgeschritt kann nun entweder die Schiene 1 mit Platten (nicht dargestellt) unterfüttert werden oder bei größeren Setzungserscheinungen 11 der Stahlbetonbalken 2 durch Unterfütterung angehoben werden.

Figur 3 zeigt das Schienenmessfahrzeug 5 in der Draufsicht. Erkennbar ist die Schiene 1 sowie der die Schiene 1 aufnehmende Stahlbetonbalken 2. Lediglich angedeutet sind die Messhilfsmittel (Reflektor 7) sowie weitere Messmittel 12,13,14 und die Antenne 8.

Das als Sensor ausgebildete Messmittel 12 misst die Neigung quer zur Schiene 1. Das Messmittel 13 ist ebenfalls durch einen Sensor gebildet und misst die Neigung in Schienenlängsrichtung sowie dient als Ergänzung der Tachymetermessung, wie sie in Figur 1 und 2 angesprochen ist.

Weitere Messmittel 14 in Form von Sensoren messen zum Beispiel die Schienenhöhe, d.h. den Abstand der Schiene 1 zum Stahlbetonbalken 2. Die einzelnen Messwerte werden, wie in Figur 2 angedeutet, über die Antenne 8 an die Datenverarbeitungsanlage 9 übermittelt und dokumentiert.

### Bezugszeichenliste

- 1: Schiene
- 2: Stahlbetonbalken
- 3: Fördergerät
- 4: Laufrad
- 5: Schienenmessfahrzeug
- 5': Laufrolle
- 6: Tachymeter
- 7: Reflektor (Messhilfsmittel)
- 8: Antenne
- 9: Datenverarbeitungsanlage
- 10: Antenne
- 11: abgesetzter Abschnitt
- 12: Sensor (Messmittel)
- 13: Sensor (Messmittel)
- 14: Sensor (Messmittel)

## Patentansprüche

1. Verfahren zur geodätischen Überwachung von für Fördergeräte (3) vorgesehene Schienen, indem zumindest im Bereich eines Schienenendes ein Tachymeter (6) mit Raumbezug stationiert wird, auf der jeweils zu überprüfenden Schiene (1) ein Schienenmessfahrzeug (5) aufgesetzt wird, das zur Messung eines unbelasteten Zustands der Schiene (1) die jeweilige Schiene (1) allein befährt und zur Messung eines belasteten Zustands der Schiene (1) mit der gleichen Geschwindigkeit, wie das Fördergerät (3) angetrieben wird, wobei die Aufnahme der Messpunkte während der Messung im be- und/oder unbelasteten Zustand der jeweiligen Schiene (1) kontinuierlich erfolgt.

2. Verfahren nach Anspruch 1, **dadurch gekennzeichnet, dass** das Schienenmessfahrzeug (5) zur Messung im belasteten Zustand mit geringem Abstand zum Fahrwerk des Fördergerätes (3) verfahren wird.

3. Verfahren nach Anspruch 1 oder 2, **dadurch gekennzeichnet, dass** das Schienenmessfahrzeug (5) zur Messung des belasteten Zustands der jeweiligen Schiene (1) mit dem Fördergerät (3), insbesondere dem Fahrwerk des Fördergerätes (3), verbunden wird.

4. Verfahren nach einem der Ansprüche 1 bis 3, **dadurch gekennzeichnet, dass** für die Messung des unbelasteten Zustands der jeweiligen Schiene (1) das Schienenmessfahrzeug (5) ferngesteuert über die jeweilige Schiene (1) verfährt, während das Fördergerät (3) in einer Warteposition geparkt wird.

5. Verfahren nach einem der Ansprüche 1 bis 4, **dadurch gekennzeichnet, dass** das Schienenmessfahrzeug (5) mit einem Reflektor (7) ausgerüstet wird.

6. Verfahren nach einem der Ansprüche 1 bis 5, **dadurch gekennzeichnet, dass** auf dem Schienenmessfahrzeug (5) weitere Messmittel (12,13,14) zur Ermittlung von Quer- und/oder Längsneigungen und/oder der Höhe der jeweiligen Schiene (1) respektive des jeweiligen Stahlbetonbalkens (2) angeordnet werden.

7. Schienenmessfahrzeug zur Durchführung des Verfahrens nach einem der Ansprüche 1 bis 6, beinhaltend mindestens ein auf der jeweiligen zu vermessenden Schiene (1) aufsetzbares Laufrad (5'), das in Wirkverbindung mit einer Messhilfsmittel (7)/ Messmittel (12,13,14) aufnehmenden Plattform steht.

8. Schienenmessfahrzeug nach Anspruch 7, **dadurch gekennzeichnet, dass** die Messhilfsmittel (7) durch mindestens einen Reflektor gebildet sind, der in Richtung eines beabstandeten Tachymeters (6) ausgerichtet ist.

9. Schienenmessfahrzeug nach Anspruch 7 oder 8, **dadurch gekennzeichnet, dass** die Messmittel (12,13,14) zur Erfassung der Quer- und/oder Längsneigung und/oder der Höhe der jeweiligen Schiene (1) durch Sensoren gebildet sind.

10. Schienenmessfahrzeug nach einem der Ansprüche 7 bis 9, des Weiteren beinhaltend eine Antenne (8) zur Übertragung der Messwerte der einzelnen Messhilfsmittel (7)/Messmittel (12,13,14) auf eine externe Datenverarbeitungsanlage (9).
